# EUROPÄISCHE PATENTSCHRIFT

(11) **EP 0 477 865 B1**
(45) Veröffentlichungstag und Bekanntmachung des Hinweises auf die Patenterteilung: **19.01.1994**
(21) Anmeldenummer: 91116245.1
(22) Anmeldetag: 24.09.1991
(51) Int. Cl.: H01S 3/03

(54) **Hochleistungsbandleiterlaser**
High power strip guide laser
Laser de haute puissance à guide d'onde en forme de bande

(30) Priorität: 26.09.1990 DE 4030441
(43) Veröffentlichungstag der Anmeldung: 01.04.1992
(73) Patentinhaber: SIEMENS AKTIENGESELLSCHAFT, 80333 München (DE)
(72) Erfinder: Krüger, Hans, Dipl.-Phys., W-8000 München 83 (DE); Kirschner, Walter, W-8043 Unterföhring (DE)

(56) Entgegenhaltungen:
- EP-A- 0 305 893
- US-A- 4 713 825
- PATENT ABSTRACTS OF JAPAN, vol. 12, no. 69 (E-587)(2916) 3. März 1988;& JP-A-62 210 685

## Beschreibung

Die Erfindung betrifft einen Hochleistungsbandleiterlaser gemäß dem Oberbegriff des Patentanspruchs 1. Ein derartiger Laser ist aus der DE-OS 37 29 053 bekannt.

Es hat sich herausgestellt, daß die Strahlqualität, d.h. die Modenreinheit des Lasers erheblich vom gegenseitigen Abstand der Wellenleiterflächen abhängt. Demgemäß liegt der vorliegenden Erfindung die Aufgabe zugrunde, die Strahlqualität eines Hochleistungsbandleiterlasers zu verbessern und die Modenreinheit zu erhöhen. Dies wird bei einem Laser gemäß dem Oberbegriff durch die kennzeichnenden Merkmale des Patentanspruchs 1 gelöst. Dabei kann der instabile Resonator durch Spiegel gebildet sein, deren Abstand wie in der US-PS 4 713 825 durch Stäbe mit sehr geringem Temperaturausdehnungskoeffizienten, z.B. aus "Invar", konstant gehalten werden.

Eine weniger aufwendige Ausführung ist gegeben, wenn die Resonatorspiegel auf einer Elektrode justiert und fixiert sind. Bei dieser Ausführung sind am Laser keine Justiereinrichtungen für die Spiegel erforderlich, da die Spiegel vor dem Einbau offenliegen und daher mit wiederverwendbaren Einrichtungen justiert werden können.

Eine erfindungsgemäße Anordnung, die es ermöglicht, den gegenseitigen Abstand der Elektroden mit sehr hoher Genauigkeit einzujustieren, weist die Merkmale auf, daß die Resonatorspiegel auf einer ersten Elektrode fixiert und gegenüber dieser justiert sind, daß eine zweite Elektrode zwischen den Resonatorspiegeln, Isolierstrecken freilassend angeordnet ist, daß ein Gehäuse aus zwei Stirnplatten, zumindest drei zwischen diesen angeordneten Metallstäben und einer mit den Stirnplatten vakuumdicht verbundenen Außenwand zusammengesetzt ist, daß die Metallstäbe alle denselben Temperaturausdehnungskoeffizienten besitzen und den Abstand zwischen den Stirnplatten definieren, daß die erste Elektrode mit einer ersten Stirnplatte fest verbunden und gegenüber einer zweiten Stirnplatte in axialer Richtung beweglich ist, in radialer Richtung aber geführt wird und daß zumindest eine Stirnplatte ein Austrittsfenster für die Laserstrahlung enthält. Dieser Aufbau gewährleistet eine von außen nicht beeinflußte Temperaturverteilung im Lasergehäuse und damit über die Metallstäbe, die den Abstand zwischen den Stirnplatten bestimmen, eine gleichbleibende gegenseitige Lage der beiden Stirnplatten. Die Metallstäbe bestimmen durch eine entsprechende Dimensionierung die Abstände der Stirnplatten, unabhängig von Temperaturunterschieden und damit verbundenen Verspannungen in der entsprechend schwächer dimensionierten Außenwand des Gehäuses.

Zusätzlich werden auch Temperaturunterschiede unschädlich gemacht, die im Inneren des Gehäuses zeitweise auftreten, beispielsweise beim Anlauf des Lasers bis zu einem Temperaturausgleich im Inneren, indem die Abstandsstäbe aus einem Material mit einem extrem geringen Temperaturausdehnungskoeffizienten bestehen, beispielsweise aus dem unter dem Firmennamen 'Invar' bekannten Material. So werden in der Anheizphase auch geringfügige Verkippungen der Elektrode infolge unterschiedlicher Ausdehnung vermieden, der Laserstrahl behält seine Richtung und das Strahlaustrittsfenster bleibt in der gewünschten Winkellage zum Entladungsraum und zu den Elektroden.

Eine mit ausreichender Genauigkeit justierbare Elektrodenanordnung ist gegeben, indem mit der ersten Elektrode elektrisch isolierende Stützglieder mechanisch fest verbunden sind, indem mit diesen Stützgliedern Halterungen für die zweite Elektrode in Richtung senkrecht zur ersten Elektrode justierbar angeordnet sind und indem die zweite Elektrode mit diesen Halterungen mechanisch fest verbunden ist. Dabei sind die Halterungen vorteilhaft als Metallbänder ausgebildet, wobei die zweite Elektrode mit diesen Metallbändern verlötet oder verschweißt ist, wobei zwischen den Halterungen und den Stützgliedern Druckfedern angeordnet sind und wobei eine oder mehrere Schrauben die Halterungen gegen den Federdruck in der gewünschten Position halten.

In der Regel sind in derartigen Anordnungen Kühlkanäle erforderlich. Hierbei ist es vorteilhaft, wenn beide Elektroden Kühlkanäle enthalten, wenn Kühlmittelanschlüsse nur in der unteren, elektrisch mit Masse verbundenen ersten Elektrode angebracht sind und wenn zwischen der ersten und der zweiten Elektrode für den Einlauf und den Auslauf je eine elektrisch isolierende und elastische Verbindungsleitung angeordnet ist, deren Elastizität gewährleistet, daß die zweite Elektrode für die Justierung ausreichend beweglich ist und durch die Federkraft beim Justieren nicht unzulässig verbogen wird.

Die Verbindungsleitungen können sich beispielsweise aus Metallrohren und elektrisch isolierenden Keramikmuffen zusammensetzen, wobei die Keramikmuffen beispielsweise auf die erste Elektrode aufgelötet sein können.

Die Erfindung wird nun anhand von zwei Figuren näher erläutert. Sie ist nicht auf die in den Figuren gezeigten Beispiele beschränkt.
- FIG 1: zeigt eine erfindungsgemäße Anordnung, wobei die Vorderwand des Gehäuses abgeschnitten ist.
- FIG 2: zeigt die Elektrodenanordnung eines erfindungsgemäßen Bandleiterlasers, wobei ein Spiegel abgeschnitten ist.

Eine Elektrodenanordnung 1 eines Hochleistungsbandleiterlasers ist mit einer Stirnplatte 2 eines vakuumdichten Gehäuses mechanisch fest verbunden und gegenüber einer Stirnplatte 3 in axialer Richtung beweglich und in radialer Richtung geführt angeordnet. Die Führung in radialer Richtung verfolgt beispielsweise durch einen oder mehrere Paßstifte 4, die von einer Elektrode 5 der Elektrodenanordnung in eine Ausnehmung der zweiten Stirnplatte 3 verlaufen.

Die zweite Elektrode 6 ist von der ersten Elektrode 5 getragen, indem Halterungen 7 mit Abstandsstücken 8 verschraubt sind. Eine Verbindungsleitung 9, welche ein isolierendes Keramikstück 10 enthält, verbindet die beiden Elektroden 5 und 6 elastisch, so daß eine Justierung der zweiten Elektrode 6 gegenüber der ersten Elektrode 5 möglich ist, ohne eine unzulässige Verformung der Elektroden zur Folge zu haben. Spiegel 11 und 12 sind ebenfalls auf der ersten Elektrode 5 befestigt und justiert. In Strahlrichtung hinter dem Spiegel 12 ist ein Strahlaustrittsfenster 28 angeordnet, welches einen Teil des vakuumdichten Gehäuses bildet.

Das vorliegende Ausführungsbeispiel enthält vier Abstandsstäbe 13 und 14, wobei in der Zeichnung jeweils zwei Abstandsstäbe hintereinander zu liegen kommen. Der Querschnitt des Gehäuses ist im vorliegend Beispiel quadratisch. Er kann aber vorteilhaft auch rund gewählt werden. Andere Ausführungsformen sind ebenfalls möglich. Die Haltestäbe 13 und 14 sind mit den Stirnplatten 2 und 3 mechanisch fest verbunden, beispielsweise verschraubt, verlötet oder verschweißt und so dimensioniert, daß sie den Abstand der Stirnplatten bestimmen. Die Gehäusewand 15 ist vergleichsweise dünn ausgebildet und mit ebenfalls relativ dünn ausgebildeten Verbindungselementen 16 der Stirnwände 2 bzw. 3 vakuumdicht verlötet oder verschweißt.

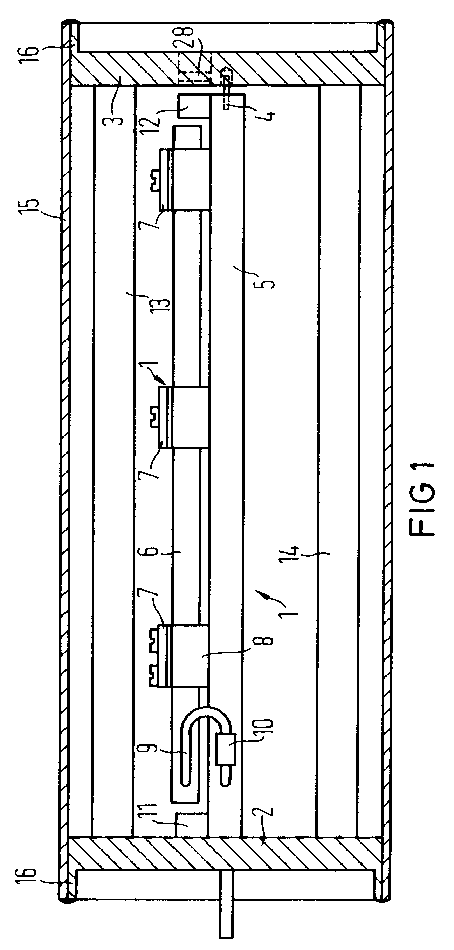

Im Beispiel der FIG 1 ist die zweite Elektrode 6 durch drei Halterungen 7 mit der ersten Elektrode 5 verbunden. Dadurch können auch geringfügige Verbiegungen der Elektroden vermieden oder ausgeglichen werden.

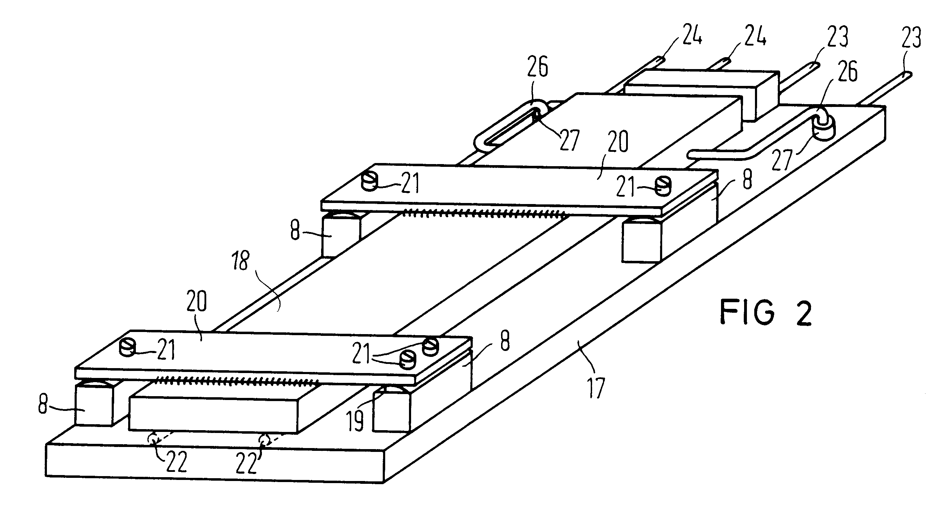

Eine vorteilhaft justierbare Ausführungsform ist in FIG 2 wiedergegeben. Dort sind auf einer ersten Elektrode 17 Abstandsstücke 8 befestigt, wobei die Abstandsstücke 8 aus Isoliermaterial, insbesondere Keramik bestehen. Auf diesen Abstandsstücken 8 sind Blattfedern 19 angeordnet, die gegen Halterungen 20 drücken. Die Halterungen 20 sind mit der zweiten Elektrode 18 mechanisch fest verbunden, beispielsweise verschweißt oder verlötet. Justierschrauben 21, die vorzugsweise Schrauben mit einem Feingewinde sind, ermöglichen eine sehr genaue Justierung des gegenseitigen Abstandes und der gegenseitigen seitlichen Verkippung der Elektroden. Hierzu werden hochpräzise Abstandsgeber, beispielsweise Schnittnadeln 22, zwischen die Elektroden geschoben und dann die Elektroden auf Berührung justiert. Dabei genügt in der Regel eine Justierschraube je Abstandsstück 8, zur Sicherung können auch zwei Justierschrauben eingesetzt werden.

Am hinten liegenden Ende der Elektrodenanordnung erkennt man einen konvexen Spiegel 25 und Kühlmitteleinläufe 23 und Kühlmittelausläufe 24 für die beiden Elektroden. Dabei sind die Kühlmitteleinläufe 23 auf einer und die Kühlmittelausläufe 24 auf der an deren Seite der Symmetrieebene der Elektrodenanordnung positioniert. Dies ergibt eine besonders spannungsfreie Konfiguration auch bei hoher Leistung des Lasers. Verbindungsleitungen 26 sind über Keramikringe 27 mit der ersten Elektrode 17 und direkt mit der zweiten Elektrode 18 verbunden, so daß die beiden Elektroden gegeneinander isoliert sind. Die Verbindungsleitungen 26 sind ausreichend elastisch ausgebildet, so daß sie die Justierung der Elektrode 18 gegenüber der Elektrode 17 nicht beeinträchtigen.

## Patentansprüche

1. Hochleistungsbandleiterlaser, welcher zwei Metallelektroden (5,6 ; 17,18) enthält, zwischen denen ein Entladungsspalt gebildet ist, wobei die Elektroden dem Entladungsspalt zugewandte Wellenleiterflächen aufweisen, wobei Resonatorspiegel (11,12) eines instabilen Resonators an eine Elektrode (5) unmittelbar angrenzen, **dadurch gekennzeichnet,** daß die Abstände der Elektroden (5,6 ; 17,18) in Längsrichtung und in Querrichtung des Entladungsraumes justierbar und auf einen gewünschten Wert einjustiert sind.

2. Hochleistungsbandleiterlaser nach Anspruch 1, **dadurch gekennzeichnet,** daß die Resonatorspiegel auf einer ersten Elektrode fixiert und gegenüber dieser justiert sind, daß eine zweite Elektrode zwischen dem Resonatorspiegel,Isolierstreifen freilassend, angeordnet ist, daß ein Gehäuse aus zwei Stirnplatten, zumindest drei zwischen diesen angeordneten Abstandsstäben und einer mit den Stirnplatten vakuumdicht verbundenen Außenwand zusammengesetzt ist, daß die Abstandsstäbe alle den gleichen Temperaturausdehnungskoeffizienten besitzen und den Abstand der Stirnplatten definieren, daß die erste Elektrode mit einer ersten Stirnplatte fest verbunden und gegenüber einer zweiten Stirnplatte in axialer Richtung beweglich, in radialer Richtung aber geführt ist und daß zumindest eine Stirnplatte ein Austrittsfenster für die Laserstrahlung enthält.

3. Hochleistungsbandleiterlaser nach Anspruch 2, **dadurch gekennzeichnet,** daß die Abstandsstäbe aus einem Werkstoff mit sehr geringem Temperaturausdehnungskoeffizienten, beispielsweise mit der Firmenbezeichnung 'Invar', bestehen.

4. Hochleistungsbandleiterlaser nach einem der Ansprüche 1 bis 3, **dadurch gekennzeichnet,** daß mit der ersten Elektrode elektrisch isolierende Abstandsstücke mechanisch fest verbunden sind, daß mit diesen Abstandsstücken Halterungen für die zweite Elektrode in Richtung senkrecht zur ersten Elektrode justierbar angeordnet sind und daß die zweite Elektrode mit diesen Halterungen mechanisch fest verbunden ist.

5. Hochleistungsbandleiterlaser nach Anspruch 4, **dadurch gekennzeichnet,** daß die Halterungen als Metallbänder ausgebildet sind, daß die zweite Elektrode mit diesen Metallbändern verlötet ist und daß zwischen den Halterungen und den Abstandsstücken Druckfedern angeordnet sind und daß eine oder mehr Schrauben die Halterungen gegen den Federdruck der Druckfeder in der gewünschten Position halten.

6. Hochleistungsbandleiterlaser nach einem der Ansprüche 1 bis 5, **dadurch gekennzeichnet,** daß beide Elektroden Kühlkanäle enthalten, daß Kühlmittelanschlüsse nur an die untere Elektrode angebracht sind und daß zwischen der ersten und der zweiten Elektrode für den Einlauf und den Auslauf je eine elektrisch isolierende und elastische Verbindungsleitung angeordnet ist, deren Elastizität gewährleistet, daß die zweite Elektrode für die Justierung ausreichend beweglich ist und durch die Federkraft beim Justieren nicht unzulässig verbogen wird.

## Claims

1. High-power stripline laser which includes two metal electrodes (5, 6; 17, 18) between which a discharge gap is formed, the electrodes exhibiting waveguide surfaces facing the discharge gap, and resonator mirrors (11, 12) of an unstable resonator immediately adjoining one electrode (5), characterized in that the spacings of the electrodes (5, 6; 17, 18) in the longitudinal direction and in the transverse direction of the discharge space are adjustable and are set to a desired value.

2. High-power stripline laser according to Claim 1, characterized in that the resonator mirrors are fixed on a first electrode and are adjusted relative to the latter, in that a second electrode is disposed between the resonator mirror, leaving insulating strips free, in that a housing is composed of two end plates, at least three spacer rods disposed therebetween and an outside wall connected to the end plates in a vacuum-tight manner, in that the spacer rods all possess the same coefficient of thermal expansion and define the spacing of the end plates, in that the first electode is fixedly connected to a first end plate and is movable in the axial direction relative to a second end plate, but is guided in the radial direction, and in that at least one end plate includes an exit window for the laser radiation.

3. High-power stripline laser according to Claim 2, characterized in that the spacer rods comprise a material having a very low coefficient of thermal expansion,for example having the trade name "Invar".

4. High-power stripline laser according to one of Claims 1 to 3, characterized in that electrically insulating spacers are mechanically firmly connected to the first electrode, in that holders for the second electrode are disposed so as to be adjustable in a direction perpendicular to the first electrode with these spacers, and in that the second electrode is mechanically firmly connected to these holders.

5. High-power stripline laser according to Claim 4, characterized in that the holders are designed as metal bands, in that the second electrode is soldered to these metal bands, and in that compression springs are disposed between the holders and the spacers, and in that one or more screws hold the holders in the desired position against the spring pressure of the compression spring.

6. High-power stripline laser according to one of Claims 1 to 5, characterized in that the two electrodes include cooling channels, in that coolant connections are attached only to the lower electrode, and in that a respective electrically insulating and elastic connecting line is disposed between the first and the second electrode for the admission and the discharge, the elasticity of which connecting line guarantees that the second electrode is adequately movable for the adjustment and is not inadmissibly bent by the spring force during adjustment.

## Revendications

1. Laser de grande puissance à guide d'ondes en forme de bande, qui comporte deux électrodes métalliques (5,6; 17,18), entre lesquelles est formée une intervalle de décharge, et dans lequel les électrodes ont des surfaces formant guide d'ondes tournées vers la fente de décharge, des miroirs (11,12) d'un résonateur instable étant immédiatement adjacents à une électrode (5), caractérisé par le fait que les distances entre les électrodes (5,6; 17,18) dans la direction longitudinale et dans la direction transversale de l'intervalle de décharge peuvent être réglées de manière variable à une valeur souhaitée.

2. Laser de grande puissance à guide d'ondes en forme de bande suivant la revendication 1, caractérisé par le fait que les miroirs du résonateur sont fixés sur une première électrode et sont réglés par rapport à cette électrode, qu'une seconde électrode est disposée entre les miroirs du résonateur, en laissant dégagées des bandes isolantes, qu'un boîtier est composé de deux plaques frontales, d'au moins trois barres entretoises disposées entre ces plaques frontales, et d'une paroi extérieure reliée d'une manière étanche au vide aux plaques frontales, que les barres entretoises ont toutes le même coefficient de dilatation thermique et définissent la distance entre les plaques frontales, que la première électrode est reliée rigidement à une première plaque frontale et est mobile dans la direction axiale par rapport à une seconde plaque frontale, mais est guidée dans la direction radiale, et qu'au moins une plaque frontale comporte une fenêtre de sortie du rayonnement laser.

3. Laser de grande puissance à guide d'ondes en forme de bande suivant la revendication 2, caractérisé par le fait que les barres entretoises sont en un matériau de très petit coefficient de dilatation thermique, par exemple connu sous la désignation commercial "Invar".

4. Laser de grande puissance à guide d'ondes en forme de bande suivant l'une des revendications 1 à 3, caractérisé par le fait que des éléments d'entretoisement électriquement isolants sont reliés mécaniquement de façon rigide à la première électrode, par ces éléments d'entretoisement, les fixations de la seconde électrode sont montées de manière à pouvoir être réglées dans une direction perpendiculaire à la première électrode, et que la seconde électrode est reliée mécaniquement de façon rigide à ces fixations.

5. Laser de grande puissance à guide d'ondes en forme de bande suivant la revendication 4, caractérisé par le fait que les fixations sont sous forme de bandes métalliques, que la seconde électrode est fixée par brasage à ces bandes métalliques et que des ressorts de compression sont disposés entre les fixations et les éléments d'entretoisement, et qu'une ou plusieurs vis maintiennent les fixations en position souhaitée, à l'encontre de la pression des ressorts de compression.

6. Laser de grande puissance à guide d'ondes en forme de bande suivant l'une des revendications 1 à 5, caractérisé par le fait que les deux électrodes comportent des canaux de refroidissement, que des raccords pour un fluide de refroidissement sont prévus uniquement sur l'électrode inférieure et qu'entre les première et seconde électrodes sont prévus, pour l'entrée et la sortie, des conducteurs respectifs de liaison électriquement isolants et élastiques, dont l'élasticité est telle que la seconde électrode soit suffisamment mobile pour le réglage et ne soit pas cintrée de façon inadmissible par la force des ressorts lors du réglage.
